**Europäisches Patentamt**

**European Patent Office**

**Office européen des brevets**

(11) Publication number : **0 493 959 A1**

## (12) EUROPEAN PATENT APPLICATION

(21) Application number : **91311953.3**

(22) Date of filing : **23.12.91**

(51) Int. Cl.⁵ : **B23K 35/363,** B23K 1/00

A request to replace orginial pages 1 and 7 of the description has been filed pursuant to Rule 88 EPC. A decision on therequest will be taken during the proceedings before the Examining Division (Guidelines for Examination in the EPO, A-V, 2.2).

(30) Priority : **28.12.90 JP 418810/90**

(43) Date of publication of application :
**08.07.92 Bulletin 92/28**

(84) Designated Contracting States :
**DE FR GB**

(71) Applicant : **Kanto Yakin Kogyo Kabushiki Kaisha**
**2543 Shinomiya**
**Hiratsuka-shi Kanagawa-ken (JP)**

(72) Inventor : **Takahashi, Susumu**
**236-50 Fujizuka**
**Hodogaya-ku, Yokohama (JP)**

(74) Representative : **Lord, Hilton David**
**Marks & Clerk 57-60 Lincoln's Inn Fields**
**London WC2A 3LS (GB)**

(54) **Brazing baths for aluminium articles.**

(57)   An inert gas, such as nitrogen, with fluorine and/or fluorides is blown occasionally into an inorganic and fluoride-containing salt bath to restore its reductive properties after the bath has been operated for brazing aluminium articles for long periods and said properties have been adversely affected by such effects as oxidation.

EP 0 493 959 A1

The present invention relates to brazing baths for aluminium or aluminium alloys, and to methods for refreshing them.

Inorganic salts are used in baths as a flux for facilitating the brazing of aluminium or aluminium alloy joins. Typical salts for use in such baths include NaCl, KCl, LiCl, $ZnCl_2$, $BaCl_2$, $N_2AlF_6$, $K_2AlF_6$, $KAlF_4$, NaF, KF and their combinations. Combinations of the salts are selected such that they have a melting point suitable for the brazing operation, and necessarily contain an adequate amount of fluorides.

During extended periods of brazing, the flux function of the bath gradually becomes weaker, as the salts are gradually oxidised by contaminants brought into the bath with the articles to be brazed, or by oxygen and moisture from the air.

The oxidation may be exemplified by the following equation for one of the salts:

$$ZnCl_2 + H_2O \rightarrow ZnO + 2HCl \uparrow$$

In order to compensate for the oxidation of the flux, various methods have been tried. One such method comprises dropping cleaned pieces of aluminium into the flux bath to react with any water in the bath, thereby producing hydrogen and precipitating aluminium oxide. This method has the drawback that aluminium must continuously be cleaned (to provide an oxide-free surface) and dropped into the bath, and also that the resulting precipitates must periodically be removed. This latter operation is particularly difficult.

Another method for removing such unwanted impurities as metals, water and oxygen, produced by prolonged use of the bath, is to subject it to direct current electrolysis. This allows a precise brazing operation. However, while this method is perfectly satisfactory, it requires expensive electrolytic installations.

Accordingly, there is a need for an inexpensive and simple method to refresh and purify brazing baths for aluminium and aluminium alloy articles.

It has now been found that the above disadvantages can be overcome when an inert gas, such as nitrogen, with fluorine and/or fluorides, for example, is blown occasionally into an inorganic and fluoride-containing salt bath to restore its reductive properties after the bath has been operated for brazing aluminium articles for long periods and said properties have been adversely affected by such effects as oxidation.

In a first aspect, the present invention provides a method for reducing, preventing or eliminating reduction in efficiency and/or performance of a brazing bath for articles of aluminium or an alloy of aluminium, comprising passing a stream of an inert, or substantially inert, gas into the bath, the gas being doped with compounds containing cationic moieties suitable for the bath.

The term "inert, or substantially inert" is used to mean a gas which, when passed into the bath, will not react disadvantageously with components of the bath, such as in a fashion to blacken the articles to be brazed, for example, and/or which will not react disadvantageously with the articles or any of the compounds being carried by the gas.

Suitable gases for use in accordance with the present invention include nitrogen and the noble gases, although nitrogen is preferred, as it is readily available and generally inexpensive.

The compounds carried by the gas will generally be readily degradable or ionisable compounds of chlorine or preferably fluorine, so as to refresh depleted stocks of the salts used in the bath. Fluorine, for example, is not cationic per se, but is suitable for the present invention. In any event, while not being bound by theory, it is suspected that the compounds carried by the gas readily undergo redox reactions with the respective oxides or other undesirable compounds, so as to regenerate the salts of the bath by replacing the cationic moieties that have been displaced by oxidation. In such an instance, it will be appreciated that the compounds carried by the gas are only limited by their ability to undergo the necessary reactions.

Particularly preferred compounds are fluorine and/or fluorides such as nitrogen fluoride, carbon fluoride and ammonium fluoride. The respective chlorides, for example, may also be used, and the fluoride-bearing gas may be used to refresh a predominantly chlorine-based bath, if desired.

The compounds are carried by the gas. The term "doped" is used herein to indicate that the stream of gas entrains the compounds, whether they are solid, liquid or gas at the operational temperature.

The gas may be introduced at any temperature, but it is preferred to heat the gas before use, so as not to lead to undesirable effects in the bath, ranging from inconvenient cooling to the possible precipitation of reactants.

The present invention also provides a brazing bath for articles of aluminium or an alloy of aluminium, the bath being provided with apparatus to supply a stream of an inert, or substantially inert, gas into the bath, the gas being doped with compounds containing cationic moieties suitable for the bath.

The gas may be supplied via holes or vents in the bottom of the bath, such holes or vents optionally being closable to prevent back-flow of the contents of the bath when no gas is being passed into the bath.

The apparatus may alternatively comprise, for example, a pipe or tube, such pipe or tube having suitable means to disperse the gas in the bath. Both forms of apparatus may be used together if desired, or a combination with any other suitable gas dispersion means may be provided.

Apparatus used to disperse the gas will preferably be of a relatively inert substance, such as stainless steel, which will be generally unreactive with the gas or the bath under operational conditions. It will also be appreciated that the apparatus need not be a permanent fixture in the bath and, for example, may a relocatable pipe moved from bath to bath in an environment with several baths.

The gas may generally be provided anywhere in the bath but, if provided at the top, for example, it may be necessary to agitate the bath in order to refresh the whole contents of the bath. Acccordingly, it is generally preferred to introduce the gas toward the bottom of the bath in order to ensure that the maximum amount of bath is refreshed without additional apparatus being required.

However, the present invention also envisages the use of suitable means to agitate or stir the bath in order to enhance distribution of gas.

The amount of gas used will be determined by requirements, but will generally be enough to cause visible bubbling. Excess gas can then be collected, purified and recycled, if desired. Likewise, the amount of cation-containing compound will generally be determined according to requirements, although use has shown that amounts may be varied widely without significant variation in performance.

It will also be appreciated that the rate of gassing will have an effect on the necessary amounts of compounds in the gas.

Gassing of the bath may take place at any suitable time. For example, there may be a continuous arrangement, whereby gas is blown into the bath for the entire time the bath is in function. Such an arrangement will usually only require a fairly low stream of the gas. Alternatively, the gas may only be blown in when it is suspected that the bath is losing efficacy, in which case it may be necessary to blow in large amounts of gas at a high rate. The invention envisages intermediate situations, also.

In a preferred embodiment, a gas of nitrogen mixed with fluorine and/or fluorides such as nitrogen fluoride, carbon fluoride, ammonium fluoride, and the like is blown into a salt bath, the fluxing function of which has been lowered, preferably by a pipe made of stainless steel and opening at a bottom part of the bath, whereby the reductive characteristics of the bath are recovered.

The method of the invention is particularly advantageous in that it makes the brazing operation stable, and is economical, needing only a simple device for operation.

The method of the present invention is so efficient and easy to employ that it can prevent reduction of the function of the salt bath even during operation.

Although amounts of fluorine and/or fluorides contained in the gas may be varied in accordance with volume of the bath, surface area, specific gravity and such like, such variation has little influence. Accordingly, ratio of fluorine and/or fluorides to the nitrogen gas is not an essential feature of the present invention.

While it will be appreciated that there is no requirement to use any further methods to restore brazing baths, other than the method described herein, the present invention nevertheless envisages the combination of any prior art method or methods with that of the present invention.

EXAMPLE

(A) Powdered BaCl (47 weight%), NaCl (17 wt%), KCl (28 wt%), and KAlF$_4$ (8 wt%) were mixed, melted and kept molten at 600°C in an electric furnace of refractory bricks provided adjacently to the bottom thereof with a pair of separated graphite electrodes facing each other.

The thus-prepared salt bath was used to braze preheated articles made of a Al-Si based aluminium alloy, mounted with an aluminium solder at the joints to be brazed, the articles being immersed. Ambient working surroundings about the electric furnace had a room temperature of 32°C and moisture of 40 to 60%.

The bath was used continuously, dipping articles to be brazed into the bath and removing them from the bath, successively.

After the operation had been continued for 48 hours, articles had blackish finishes and the joints were incompletely brazed.

(B) Nitrogen gas containing 2% of ammonium fluoride and heated to a temperature of 130°C was fed into the salt bath continuously for one hour via a stainless steel pipe with a number of blowholes which open adjacent the bottom of the furnace. The introduced gas caused bubbling in the salt.

The brazing operation was then restarted. Joints were once again brazed satisfactorily, while the surfaces of the brazed articles remained brilliant. This shows that the deterioration of salt bath by oxidation was rectified by feeding in the doped gas, and that the reductive characteristics of the bath were recovered.

**Claims**

1. A method for reducing, preventing or eliminating reduction in efficiency and/or performance of a brazing bath for articles of aluminium or an alloy of aluminium, comprising passing a stream of an inert, or substantially inert, gas into the bath, the gas being doped with compounds containing cationic moieties suitable for the bath.

2. A method according to claim 1, wherein the gas is nitrogen.

3. A method according to claim 1 or 2, wherein the compounds are readily degradable or ionisable compounds of chlorine or preferably fluorine.

4. A method according to claim 3, wherein the compounds are selected from fluorine and/or fluorides such as nitrogen fluoride, carbon fluoride and ammonium fluoride.

5. A brazing bath for articles of aluminium or an alloy of aluminium, the bath being provided with apparatus to supply a stream of an inert, or substantially inert, gas into the bath, the gas being doped with compounds containing cationic moieties suitable for the bath, the gas and/or compounds optionally further being as defined in any one or more of claims 2 to 4.

6. A bath according to claim 5, wherein the apparatus comprises holes or vents in the bottom of the bath, the holes or vents optionally being closable to prevent back-flow of the contents of the bath when no gas is being passed into the bath.

7. A bath according to claim 5 or 6, wherein the apparatus comprises a pipe or tube, such pipe or tube having suitable means to disperse the gas in the bath.

8. A bath according to any of claims 5 to 7, wherein the apparatus is made of stainless steel.

9. A bath according to any of claims 5 to 8, wherein the apparatus further comprises suitablemeans to agitate or stir the bath in order to enhance distribution of gas.

10. In a method of brazing aluminium or aluminium alloy articles fitted with solders at their joints to be brazed by dipping the articles into a salt bath containing inorganic salts including fluorides, wherein the improvement comprises blowing into the bath a nitrogen gas containing fluorine and/or fluorides on occasion when the salt becomes deteriorated by oxidation and in order to recover its reductive properties.

EP 0 493 959 A1

European Patent Office

**EUROPEAN SEARCH REPORT**

Application Number

EP 91 31 1953

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 723 448 (M.A.MILLER) 15 November 1955<br><br>* column 4 - column 5; claims; examples *<br>--- | 1-3,5-7, 10 | B23K35/363<br>B23K1/00 |
| A | DE-C-891 484 (SIEMENS & HALSKE) 28 September 1953<br>--- | | |
| A | US-A-2 561 565 (A.P.EDSON ET AL) 24 July 1951<br><br>----- | | |
| | | | TECHNICAL FIELDS SEARCHED (Int. Cl.5)<br><br>B23K |

The present search report has been drawn up for all claims

| Place of search | Date of completion of the search | Examiner |
|---|---|---|
| THE HAGUE | 27 APRIL 1992 | MOLLET G.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)

5